# EUROPEAN PATENT SPECIFICATION

(11) **EP 2 450 727 B1**
(45) Date of publication and mention of the grant of the patent: **18.09.2013**
(21) Application number: 10014338.7
(22) Date of filing: 05.11.2010
(51) Int. Cl.: G02B 6/44

(54) **Optical fibre coupling device and optical fibre coupling assembly**
Lichtwellenleiterkopplungsvorrichtung und Lichtwellenleiterkopplungsanordnung
Dispositif de couplage de fibre optique et ensemble de couplage de fibre optique

(43) Date of publication of application: 09.05.2012
(73) Proprietor: Tyco Electronics Raychem BVBA, 3010 Kessel-Lo (BE)
(72) Inventor: Vastmans, Kristof, 3370 Boutersem (BE); Claessens, Bart Mattie, 3500 Hasselt (BE)
(74) Representative: Grünecker, Kinkeldey, Stockmair & Schwanhäusser

(56) References cited:
- EP-A1- 2 216 665
- EP-A2- 1 004 912
- WO-A1-00/03275
- DE-A1- 4 419 903
- US-A1- 2006 193 591
- US-A1- 2007 172 175
- US-A1- 2009 290 844
- US-B1- 6 210 047

## Description

The present invention relates to an optical fibre coupling device as defined in the preamble of claim 1. Further, the present invention refers to an optical fibre coupling assembly comprising an optical fibre coupling device.

Such an optical fibre coupling device and optical fibre coupling assembly are commonly used in a building distributor box provided e.g. in a multiple dwelling unit (MDU) for coupling an optical fibre cable coming from a provider side with e.g. a riser optical fibre cable feeding a single dwelling unit such as an apartment. The coupling of said optical fibre cable and the riser optical fibre cable may be achieved by splicing respective optical fibre elements provided with the cables, respectively, wherein at least one optical fibre element of the incoming optical fibre cable may be spliced to a single or a plurality of optical fibre elements of the riser optical fibre cable. The spliced parts of the optical fibre elements are generally stored in a fibre optic splitter module as, for instance, known from US 7,424,241 B2. Said fibre optic splitter module is comprised of a housing having an inlet and an outlet for guiding optical fibre elements to an inside of the housing and outwardly thereof. A holder for an optical fibre connector and an optical fibre element organizing means are provided inside the housing. Moreover, a splice holder is provided inside the housing proximate the outlet, which splice holder is provided for supporting splices connecting optical fibre elements coming from the optical connector with optical fibre elements passing through the outlet to the outside of the fibre optic splitter module. The inlet of the housing is adapted to support the optical fibre connector from which the optical fibre cable comprising the optical fibre element runs directly or through the optical fibre element organizer to the optical fibre connector, e.g. a splitter which is insertable into an optical fibre element splice holder. From said splitter, a plurality of optical fibre elements extends directly or through the optical fibre element organizer toward the splices supported by the splice holder. Due to said configuration, an optical signal received by the optical fibre connector provided at the inlet of the housing can be split to a plurality of optical fibre elements and guided thereby to an outside of the fibre optic splitter module, wherein the optical fibre elements range from the splices secured in the splice holder through the outlet to an outside of the fibre optic splitter module. Said fibre optic splitter module is further designed to be inserted into a module receiving box provided for receiving of plurality of fibre optic splitter modules.

The known fibre optic splitter module is complex shaped and requires a high amount of parts for achieving an optical connection between the optical fibre cable coming from a provider to a riser optical fibre cable feeding the MDU. Further, said fibre optic splitter module is configured to be housed in a module receiving box which may form part of the building distributor box. Thus, a capacity of fibre optic splitter modules and, therefore, a number of possible connections between optical fibre cables coming from the provider and the customer is limited in the building distributor box. Accordingly, further optical fibre cables coming from the provider cannot be simply connected with further riser optical fibre cables due to lack of respective means for storing such intended additional optical connections.

A generic optical fibre coupling device is for instance known from US 2009/290844 A1. Said patent document discloses an optical fibre coupling device comprising a housing provided with an accommodation section for accommodating and connecting an outgoing optical fibre element with an optical fibre, with which an optical cable is provided The housing is further provided with at least one passaae for the outgoing optical fibre element and at least one access for an incoming optical fibre cable comprising at least one optical fibre element being connected to said outgoing optical fibre element.

Further, the optical fibre coupling device comprises a fixation section for the fixation of the outgoing optical fibre element. Between the accommodation section and the at least one passage, there is provided at least one passage way, which is defined by an annular groove provided on the bottom of the bottom housing shell and the circumferential gap of a fixation plate, along which the outgoing optical fibre is guided.

The optical fibre coupling device disclosed in US 2009/290844 A1 facilitates the connection of at least one optical fibre from an optical cable, which is guided through the optical fibre coupling device with one outgoing optical fibre element.

In the optical fibre coupling device known from US 2009/290844 A1, it is problematic to firmly fix the outgoing optical fibre to the housing. Therefore, the length of the optical fibre cable in the accommodation section cannot be easily adjusted

A further optical distribution device is for instance known from EP 2 216 665 A1. Said optical distribution device comprises a housing, which provides a chamber for accommodating a cable splice and an overlength of at least one or two optical fibre splice together. The housing is adapted to provide inlet and outlet openings for guiding an optical cable into the chamber provided by the housing and out of the housing, respectively. Those openings can be formed by breaking out wall sections of the bottom housing shell. The further outgoing optical fibre is connected to at least one optical fibre element of the optical cable.

A further waterproof and airtight fibre cable splice enclosure assembly is known from WO 00/03275 A1.

The object of the present invention is to provide an optical fibre coupling device having a simple shape with reduced parts and which can be simply assembled. A further object of the present invention is to provide an improved optical fibre coupling assembly comprising an optical fibre coupling device.

In order to solve the aforesaid object, the present invention proposes an optical fibre coupling device having the features as defined in claim 1. According to said embodiment, the housing is divided into at least two sections, the fixation section for accommodating and securing a predetermined length of the outgoing optical fibre cable against the housing, and the accommodating section for providing enough space for accommodating a connection of the incoming optical fibre element with the outgoing optical fibre element, wherein said connection is preferably a splice further preferably held by a splice holder to be arranged in the accommodating section. Preferably, in case of need, the housing may provide further sections such as an organizing section for further organizing the at least one optical fibre element or a loop storage section for storing a loop of the at least one optical fibre element which is to be accommodated by the optical fibre coupling device. The optical fibre coupling device is preferably formed of an injection molded plastic material.

Due to said configuration, the incoming optical fibre cable is receivable by and installable within the housing of the optical fibre coupling device without the necessity of providing the housing with an optical connector at its access. Thus, the incoming optical fibre cable may be simply passed through the access and can be spliced within the housing to the at least one outgoing optical fibre element which is securable against the housing in the fixation section, whereby a part number of the optical fibre coupling device can be kept small, and whereby an insertion loss normally caused by the optical fibre connector and further particularly by a plurality of optical connectors can be minimized. Moreover, a connection of the optical fibre elements of the incoming and outgoing optical fibre cables can be performed rapidly, wherein an assembling of the optical fibre coupling device is further improved. Additionally, the fixation section, in which the outgoing optical fibre cable is secured, preferably fixed against the housing, provides an axial pull relief from the splice, which may be accommodated in the accommodating section. Particularly, an axial tension load acting on the outgoing optical cable may be absorbed at the point of securing (fixation) formed in the fixation section between the outgoing optical fibre cable and the housing.

The inventive optical fibre coupling device allows a modular assembling of the inventive optical fibre coupling device. Further, a degree of freedom with respect to a provision of the number of outgoing optical fibre cables is increased, since said number may be adapted according to individual demand. Moreover, the securing of the outgoing optical fibre cable may be simply achieved, as the thermosetting material may be directly introduced into the section through the lid covering the section. Preferably, the lid is retained in a direction perpendicular to the longitudinal direction of the outgoing optical fibre cable accommodatable in the fixation section. Thus, the thermosetting material may be prevented from loosening the lid from the housing while introducing the thermosetting material through the lid. The insert may be adhered to the part of the outgoing optical fibre cable as described above.

The outgoing optical fibre cable is fixable to the insert being securable in the fixation section. Thus, the fixation section is configured accordingly to receive the insert and to secure it against the housing, wherein the fixation section is particularly adapted to receive an insert having a preferred configuration as described below. Thereby, the splice between the optical fibre element of the incoming optical fibre cable and the optical fibre element of the outgoing optical fibre cable may be reliably secured, since a displacement of at least the outer jacket of the outgoing optical fibre cable in its longitudinal direction corresponding to an opening direction of the passage through which said outgoing optical fibre cable is passed can be prevented. Said insert is connectable at least partially to the part of the outgoing optical fibre cable to be accommodated in the fixation section. In other words, the insert may be connectable to a full longitudinal length of the part of the outgoing optical fibre cable or to a partial longitudinal length thereof, wherein the longitudinal length corresponds to an extension direction of the outgoing optical fibre cable. Moreover, the insert may be preferably configured to partially or further preferably fully surround said part of the outgoing optical fibre cable in circumferential direction thereof. The connection of the insert to the part of the outgoing optical fibre cable to be accommodated in the fixation section can be achieved preferably by means of adhesive bond, form fit or frictional connection. In general, as the insert can be regarded any material which may be connectable with an outer surface of the accommodated part of the outgoing optical fibre cable, wherein the material is preferably adapted to prevent a displacement between the insert and the outgoing optical fibre cable in longitudinal direction thereof and wherein the material is preferably insertable simultaneously with said part of the outgoing optical fibre cable into the passageway of the respective configured fixation section. Hence, said insert may be formable of an adhesive material which fixes the outgoing optical fibre cable to the fixation section by adhesive bond, wherein the adhesive material is further preferably bonded in the fixation section to an inner surface of the housing. Alternatively, a predetermined amount of the adhesive material may be bonded to the part of the outgoing optical fibre cable prior to an insertion of said part into the fixation section such that, after hardening of the adhesive material, said hardened material fixed to the part of the outgoing optical fibre cable can be inserted into the respective configured fixation section partially or so as to completely fill the fixation section. In the latter case, the insert may also function as a seal for the optical fibre coupling device to seal the inside of the housing in which the optical fibre cable operated and organized is stored.

Generally, the fixation section may be configured to receive and secure the insert against the housing by means of adhesive bonding, form fit or frictional connection. Further preferably, the fixation section may be configured to allow removal of the insert therefrom for e.g. replacement issues due to a defective outgoing optical fibre cable. Particularly, the housing preferably provides an abutment for the insert between said passageway and the at least one passage to reliably secure the insert in the fixation section against the housing in longitudinal direction of the outgoing optical fibre cable. Moreover, the accommodating section is preferably adapted to accommodate such a length of the outgoing optical fibre cable that an axial tensile load acting on the outgoing optical fibre cable, i.e. on the splice may be prevented even though the insert may be slightly displaceable in longitudinal direction of the outgoing optical fibre cable due to tolerance issues of the insert with respect to the size of the fixation section.

Naturally, the optical fibre cable to be received and accommodated by the optical fibre coupling device according to the present invention may be a commonly known one which comprises substantially an outer cable jacket surrounding and protecting at least one optical fibre element, wherein the optical fibre cable may be further provided with at least one strain relief element arranged between the outer cable jacket and the at least one optical fibre element. For such a structured optical fibre cable, the insert may be fixed to the outer jacket and/or to the strain relief element. Therefor, the outer jacket has to be removed accordingly to expose the strain relief element to be fixed to the insert, wherein the fixation section is configured to receive the insert with the thereto fixed outer cable jacket and/or the at least one strain relief element. More preferably, the insert may be also fixable to a predetermined length of the optical fibre element which projects the strain relief element. Accordingly, the insert may be fixable to the outer cable jacket and/or the at least one strain relief element and to the at least one optical fibre element. According thereto, a displacement between the outgoing optical fibre cable with said at least one optical fibre element and the insert may be prevented at least in the fixation section preferably configured accordingly. Hence, an axial tensile load acting on the outgoing optical fibre cable and on the optical fibre element guided thereby can be absorbed by the insert and the housing securing the insert in the fixation section at least in longitudinal direction of the outgoing optical fibre cable.

In a further preferred embodiment of the optical fibre coupling device, a loop function for the incoming optical fibre cable may be provided. According thereto, the incoming optical fibre cable, which may be a commonly known one as described exemplary above, does not be required to be terminated inside the housing, whereby unconnected optical fibre elements of the incoming optical fibre cable may be guided to the outside of the optical fibre coupling device without connection with optical fibre elements of the outgoing optical fibre cable. In this preferred embodiment, the housing is comprised of an access and an exit for the incoming optical fibre cable. In other words, the exit is preferably constituted for guiding an optical fibre element or the optical fibre cable from an inside of the housing to an outside thereof, whereas the access is preferably used for guiding the optical fibre element or the optical fibre cable from the outside to the inside of the housing. Consequently, if the exit is used for guiding the optical fibre element or the optical fibre cable from the outside of the housing to the inside thereof, the exit adopts the function of the access. In general, the access denotes a part of the housing through which at least one incoming optical fibre element or optical fibre cable is guided from an outside toward an inside of the housing. Whereas the exit constitutes the part of the housing through which at least one incoming optical fibre element or incoming optical fibre cable is guided from the inside of the housing toward the outside thereof. Preferably, the access and/or the exit may be provided with a tube for guiding therethrough at least the optical fibre element of the incoming optical fibre cable.

Further preferably, the access and/or the exit may be provided at the side of the housing which comprises the at least one passage. In a further preferred embodiment, the access and the exit are provided at an identical housing side and, more preferably, sandwich the at least one passage at said housing side. Due to said configuration, the optical fibre coupling device may be arranged at a position, which allows an organization of the incoming and outgoing optical fibre cables only at one side of the optical fibre coupling device. Further preferably, the access and the exit may be formed of a common housing opening, wherein said housing opening is configured to receive and guide the incoming optical fibre cable from the outside to the-inside of the housing and in a reverse direction thereto. Generally, the housing opening may be formed to guide therethrough at least two optical fibre cables or two optical fibre elements, respectively. Preferably, the exit and/or the access are configured to guide at least two optical fibre elements or at least two optical fibre cables in a side-by-side arrangement to keep a height of the optical fibre coupling device small, or one upon the other to keep a width of the optical fibre coupling device small.

According to a further preferred embodiment of the present invention, the first and second housing parts form a housing inside in which the outgoing and incoming optical fibre cables can be organized and operated so as to be spliced, wherein the splice is accommodatable in the housing inside. The first and second housings form a box-shaped housing, wherein one of the first and second housing parts provide the base on which the optical fibre cables may be operated and organized and wherein the other one of the first and second housing parts provide a cover for the operated and organized optical fibre cables. Thereby, the optical fibre cables accommodated inside the housing may be protected in the closed state of the housing while the optical fibre coupling device is further handled. Preferably, the housing parts may be connected with each other with a sealing provided therebetween to further improve protection of the optical fibre cables and optical fibre elements to be accommodated in the housing inside. Generally, the box-shaped housing may adopt any shape suitable for achieving the above functions, such as a rectangular shape, a triangular, a circular shape and the like. From those shapes, the rectangular one is preferred, as said shape allows, in case of need, stacking in width or height direction of the optical fibre coupling device in a rather compact manner.

In addition, the detent recess is preferably formed of a slot provided at a periphery of one of the first and second housing parts and protruding therefrom. The detent latch is preferably formed of a flange protruding from a periphery of the other housing part, wherein said flange is adapted to be received by said slot. In an engaged state of said slot and flange, a hinge is provided between the housing parts at one longitudinal end side at a lateral edge thereof, whereas the opposing longitudinal end side of the housing parts may be adapted to be secured against each other by means of bolts or screws. More preferably, the slot is surrounded by a frame, wherein the flange further preferably provides at a free end side a first engaging portion for engaging behind the frame in an engaged state of the slot and the flange so as to prevent a displacement between the housing parts toward an inside direction of the housing. Due to said configuration, the assembling of the optical fibre coupling device can be further simplified, as one longitudinal end side of the housing parts may be secured against each without additional means such as bolts or screws. Further preferably, the housing parts provides at their lateral sides alignment means adapted to cooperate with each other so as to align the housing parts in the assembled state of the optical fibre coupling device. The alignment means may be preferably formed of at least one projection laterally protruding one housing part and at least one associated projection receiving recess provided with the other housing part for receiving the at least one projection. According thereto, the assembling of the optical fibre coupling device may be further improved.

In the optical fibre coupling device, the above-described hinge may be preferably provided at the side of the housing comprising the passage through which the outgoing optical fibre cable is passable. Thus, the lid may adopt several functions as covering the passage and providing a support for the one housing part. Furthermore, as the lid is preferably retained in the remaining side directions of the housing, the housing parts are secured against each other at the hinge side by means of the lid, whereas at one other lateral side, i.e. the opposing housing side, the housing parts may be preferably directly secured against each other as described above, i.e. by means of bolts or screws or the like. Accordingly, the housing part comprising the passage provides a less complex shape. Moreover, additional passages for further outgoing optical fibre cables may be provided at said respective housing side, since a space for fixing means to fix at said longitudinal end side the housing parts with each other can be saved.

According to a further preferred embodiment of the optical fibre coupling device, an optical fibre splice formed between at least two optical fibre elements may be supported by the optical fibre element splice holder inside the housing and distant form an inner bottom surface of the housing. The hook portion of the optical fibre element splice holder has preferably a hammer-head shaped configuration projecting from the surface side of the holder. The corresponding recess formed in the first housing part has an associated shape, respectively. That is, over a thickness direction of the wall side of said first housing part comprising the recess, a width of the recess at the wall inside surface is smaller than a width of the recess at the wall outside surface, wherein the edges surrounding the recess at the wall inside surface are connected to corresponding edges surrounding the recess at the wall outside surface by an inclined wall portion. Said inclined wall portion provides an abutment for the neck portion of the hammer-head configuration provided with the holder.

In a further preferred embodiment of the present invention, said recess has a larger depth along the plane of the wall portion than an outer size of the hook portion of the optical fibre element splice holder. Further, the second housing part covering the first housing part has a protrusion of a hammer-head shape, wherein said protrusion is formed at a position corresponding to the recess formed in the first housing part. Said protrusion of the second housing part is received by said recess in an assembled state of the housing parts, whereby the second housing part with said protrusion secures the optical fibre element splice holder received by said recess of the first housing part to the housing.

Additionally, the optical fibre element splice holder is supported suspended inside the housing. Thereby, a space is provided between an inner bottom surface of the first housing part and the lower surface side of the optical fibre element splice holder. Through said space, the optical fibre elements may be arranged in a loop without being interfered by the optical fibre connector supported by said holder, respectively.

In a further preferred embodiment of the optical fibre coupling device, the optical fibre coupling device may be simply attached to the optical fibre coupling device support module. Preferably, the positioning and fixation means is substantially L-shaped with one portion projecting an outer surface of the housing and extending preferably substantially in parallel thereto. In other words, the positioning and fixation means provides a longitudinal protrusion protruding from the outer surface of the housing perpendicular thereto and preferably basically straightly, wherein one longitudinal end side of the longitudinal protrusion is secured against the outer surface of the housing. The outer surface of the housing corresponds to the housing side which faces away from the inside of the housing. Preferably, the longitudinal protrusion is formed integral with the housing side of one of the first and second housing parts. Alternatively, the longitudinal protrusion may be fixed to the housing side of one of the first and second housing parts by means of screws, bolts, adhesive or the like. The longitudinal protrusion provides an outer shape preferably adapted to function as an engagement means to be received by receiving means of the supporting module, which receiving means further preferably provides guiding means for guiding a motion of the received engagement means in a predetermined direction relative to the supporting module. Particularly, the receiving means of the supporting module may be preferably formed of a slot, further preferable of a longitudinal slot with an entrance adapted to receive a free end of the positioning and fixation means, wherein the longitudinal protrusion received by said slot is movably guidable therein in longitudinal direction of the slot. More preferably, the longitudinal protrusion is adapted to fit into the longitudinal slot to decrease leverage effect between the optical fibre coupling device and the supporting module. Further, the free end side of the longitudinal protrusion may be preferably adapted to engage behind one of the wall portions of the supporting module, which wall portion form the slot. That is, the longitudinal protrusion has preferably a longitudinal length corresponding to a thickness of the wall portion of the supporting module, which wall portion form the slot. Thereby, the free leg of the longitudinal L-shaped protrusion may abut against the wall portion of the supporting module at a side thereof opposing the side at which the housing side of the optical fibre coupling device may be arranged in the assembled state thereof with the supporting module. According thereto, the optical fibre coupling device may be reliably secured against and supported by the supporting module, wherein the optical fibre coupling device may be movable substantially only in longitudinal direction of the slot in the received state of the positioning and fixation means.

As a matter of course, the positioning and fixation means is not to be construed to be limited to the above configuration. Alternatively, the optical fibre coupling device may provide at its lateral housing side a slot portion forming receiving means for receiving an associated protrusion forming position and fixation means provided with the supporting module. For this case, the slot may preferably not be formed as an opening in the wall forming the housing side, as a free end of the protrusion provided with the supporting module may interfere the optical fibre elements and/or optical fibre cables organized and operated inside the housing. Preferably, the slot may be provided with a predetermined distance to the housing side surface, wherein said distance is adapted to receive the free end, i.e. one leg of the preferably L-shaped positioning and fixation means provided with the supporting module. In other words, the respective housing wall portion may be formed double-walled with a space provided between the two walls, wherein the outer wall may provide the receiving means for receiving the position and fixation means of the supporting module, and wherein the space formed between the two walls provides an accommodating space for accommodating a free end of the positioning and fixation means. Said free end is further preferably formed of an engagement to engage behind the outer wall of the housing so as to be accommodated in said space.

Further preferable, the receiving means may provide a stop at a longitudinal end to restrict a longitudinal move of the positioning and fixation means. Said stop forms a fixation position for the optical fibre coupling device received by the supporting module. At said fixation position, the optical fibre coupling device may be preferably adapted to co-operate with the supporting module so as to be secured at said fixation position against the supporting module. The securing may be preferably obtained by positive locking between the optical fibre coupling device and the supporting means. Particularly, the optical fibre coupling device may be provided with positive locking means such as snapping means or the like, wherein said snapping means are adapted to co-operate with associated snapping receiving means provided with the supporting module. Exemplary, the snapping means and the snapping receiving means may be preferably formed of a safety catch and an associated safety catch latch, wherein one of the optical fibre coupling device and the supporting module may be provided with the safety catch and the other one thereof with the safety catch latch. The position of the snapping means and the snapping receiving means may be suitably selected. Preferably, the optical fibre coupling device comprises the snapping receiving means at a longitudinal end side of the housing opposing the longitudinal end side comprising the at least one passage and the access. A similar configuration may be provided in case the supporting module has the position and fixation means to be engaged with the receiving means of the optical fibre coupling device.

Alternatively or additionally, the housing may preferably comprise securing means for securing the housing directly against a base such as a base plate of e.g. a building distributor box, in which the optical fibre coupling device may be arranged. Said securing means may be preferably formed of protrusions protruding in a bottom plane of the housing lateral from the housing side and being further preferably plate-shaped with a through hole for receiving fixation means like a screw or a bolt to fix the optical fibre coupling device to the base plate of the building distributor box. The present invention is not to be construed to be limited to the aforementioned kind of securing means. Any feasible securing means may be provided with the optical fibre coupling device, which securing means are capable of securing the optical fibre coupling device against a base, which base may be a base plate or a wall surface side and the like of e.g. the building distributor box.

According to a further aspect of the present invention, the optical fibre coupling assembly allows a simple and fast connection of the optical fibre cable coming from the provider with e.g. the riser optical fibre cable. Preferably, the optical fibre coupling device, the insert and/or the optical fibre cable may have a configuration as described above with respect to the preferred embodiments of the present invention.

The present invention will now be described in further detail by referring to a preferred embodiment depicted in the accompanying drawings. In these drawings:
- Figure 1A: shows a perspective top view of an optical fibre coupling device in a closed state thereof according to a preferred embodiment;
- Figure 1 B: shows a perspective top view of the optical fibre coupling device as shown in Figure 1A without a second housing part;
- Figure 2: shows a perspective top view of the first housing part without a lid of the optical fibre coupling device shown in Figures 1A and 1 B; and
- Figure 3: shows an enlarged perspective side view of a fixation section covered by the lid provided with the first housing part of the optical fibre coupling device shown in Figures 1A and 1B.

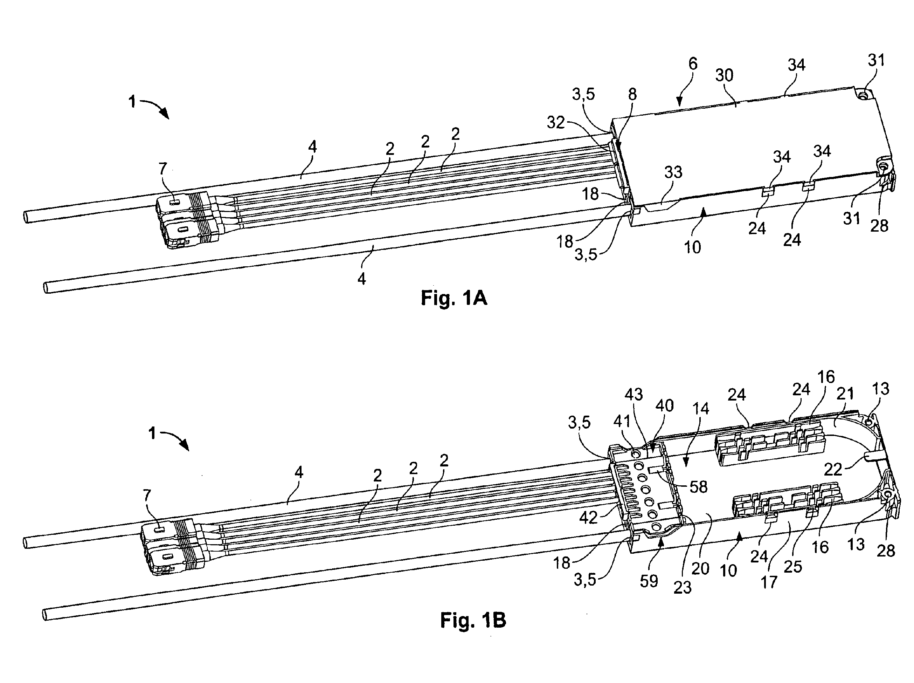

Figure 1A shows a perspective top view of the optical fibre coupling device 1 according to a preferred embodiment. The optical fibre coupling device 1 comprises a housing 6 with a first housing part 10 covered by a second housing part 30. The first and second housing parts 10, 30 are substantially rectangular shaped with longitudinal end sides having a smaller width than the sides in longitudinal direction of the optical fibre coupling device 1, which longitudinal sides connect the longitudinal end sides of the housing parts 10, 30, respectively. The first housing part 10 is box-shaped and is substantially cross-sectionally U-shaped, whereas the second housing part 30 is plate-shaped and forms a housing cover for the first housing part 10. The first and second housing parts 10, 30 are made of an injection molded plastic material. The first and second housing parts 10, 30 are connected at one longitudinal end side with each other by a hinge 8, which allows a pivot of the first and second housing parts 10, 30 around a pivot axis extending in parallel to an extension direction of the one longitudinal end side of the housing 6. The hinge 8 is provided substantially in a top plane of the first housing part 10. In other words, the hinge 8 is arranged in a plane including the plate-shaped second housing part 30 in an assembled state of the housing 6.

At the opposing longitudinal end side of the housing 6, the first and second housing parts 10, 30 are secured against each other by means of a screw. Particularly, the first housing part 10 provides at the opposing longitudinal end side two screw holes 13, wherein each screw hole 13 is arranged at a corner area of the opposing longitudinal end side of the housing 6. Accordingly, the second housing part 30 comprises at the opposing longitudinal end side at positions associated with the screw hole 13, a through-hole 31 for receiving a screw to be inserted into the screw hole 13 of the first housing part 10.

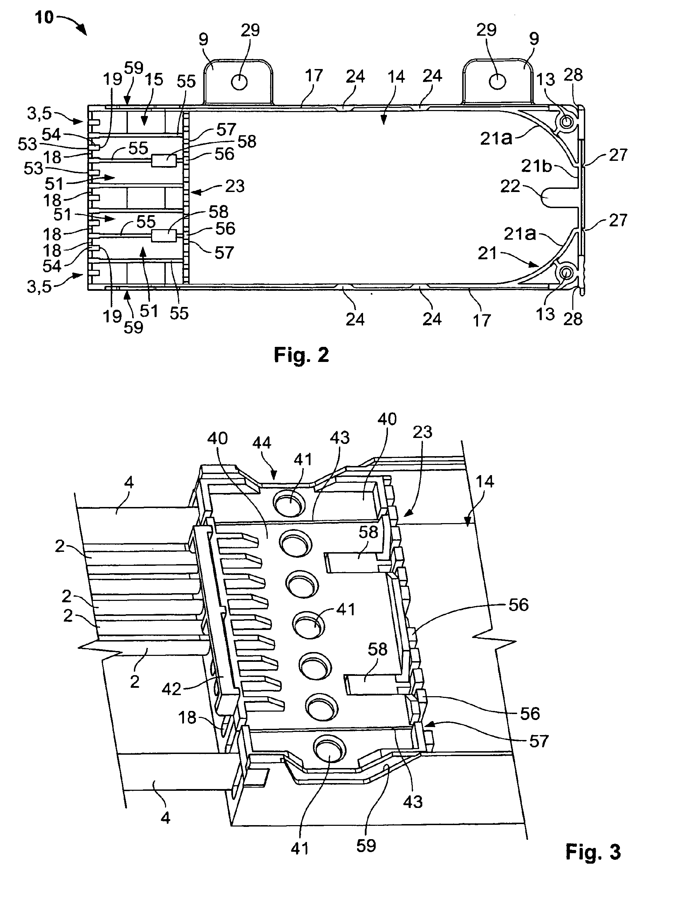

The housing 6, i.e. the first housing part 10 provides at the one longitudinal end side an access 3 and an exit 5, wherein the access 3 and the exit 5 are formed at a corner area of the one longitudinal end side of the housing 6, respectively. The access 3 and the exit 5 guide a tube 4 between an outside of the housing 6 and an inside thereof. Even though a tube 4 for guiding an optical fibre element is shown in the Figures 1A and 1B, the present invention is not to be construed to be limited thereto. The access 3 and/or the exit 5 may also guide an incoming optical fibre cable comprising an optical fibre element to the inside of the housing 6. In general, the access 3 and the exit 5 may be formed of an opening in the housing side wall (Figure 2) and provided for receiving any means surrounding an optical fibre element to guide at least the optical fibre element to the inside of the housing 6 and to the outside thereof, respectively.

The housing 6, i.e. first housing part 10 further has a plurality of passages 18 arranged in a row between the access 3 and the exit 5. Further particularly, the passages 18 are arranged below the hinge 8 with respect to the second housing part 30. The passages 18 guide an outgoing optical fibre cable 2 from the inside of the housing 6 to the outside thereof. As shown in Figures 1A and 1B, each passage 18 guides one outgoing optical fibre cable 2, wherein the plurality of outgoing optical fibre cables 2 are connected at their longitudinal free end side by an optical fibre connector 7. The plurality of outgoing optical fibre cables 2 forms a commonly known pigtail. The outgoing optical fibre cable 2 needs not necessarily to be provided with the optical fibre connector 7 at its longitudinal free end side. The optical fibre connector 7 may be installed at a later stage, i.e. after already installing the optical fibre coupling device in a respective box such as a building distributor box. Alternatively, the longitudinal free end side of the outgoing optical fibre cable 2 may be protected by a dust cover or connected to another optical fibre cable. Moreover, the passage 18 may be adapted to guide more than one outgoing optical fibre cable 2 between the inside and the outside of the housing 6.

Figure 1B shows a perspective top view of the optical fibre coupling device 1 without the second housing part 30, i.e. an open state of the optical fibre coupling device 1. The first housing part 10 is basically divided into a first housing compartment forming a fixation section 15 (see Figure 2) covered by a lid 40 and a second housing compartment forming an accommodating section 14. The fixation section 15 is provided for securing the outgoing optical fibre cable 2 against the housing 6. The accommodating section 14 is provided for operating and organizing at least one optical fibre element. As can be particularly seen in Figure 1B, the accommodating section 14 accommodates two optical fibre element splice holders 16 provided for holding a connection formed between at least two optical fibre elements. The optical fibre element splice holders 16 are suspendly supported by the first housing part 10 at its longitudinal wall portions 17. The longitudinal wall portion 17 comprises a pair of holding recesses 24 for receiving a hook portion 25 provided at a lateral side of the optical fibre element splice holder 16. A number of holding recesses and associated hook portions is not limited. Thus, the first housing part 10 may be alternatively provided with only one holding recess 24 at one longitudinal wall portion 17 or with a plurality thereof. The number of holding recesses and of associated hook portions may be selected dependent on a supporting stability to be provided for the optical fibre element splice holder 16. Furthermore, the number of holding recesses may differ from the number of hook portions provided with a single optical fibre element splice holder 16. Accordingly, one longitudinal wall portion 17 may be adapted to support more than one optical fibre element splice holders 16.

The holding recess 24 has a depth adapted to suspendedly supporting the optical fibre element splice holder 16. In other words, in a supporting state of the optical fibre element splice holder 16, which state corresponds to a state in which the holding recess 24 receives the hook portion 25, a space is formed between an inner bottom surface 20 of the first housing part 10 and a facing outer bottom surface of the optical fibre element splice holder 16. The space is selected so as to provide enough space for guiding between the inner bottom surface 20 and the outer bottom surface of the optical fibre element splice holder 16 at least one optical fibre element or the incoming optical fibre cable 2. Hence, the incoming optical fibre cable 2 and/or the optical fibre element accommodated in the accommodating section 14, respectively, are supported on the inner bottom surface 20, i.e. in a plane being different from a plane in which the connection formed between at least two optical fibre elements is supported by the optical fibre element splice holder 16. Further particularly, the incoming optical fibre cable 2 and/or the at least one optical fibre element accommodated in the accommodating section 14 is/are arranged between the inner bottom surface 20 and a bottom rim portion of the holding recess 24, which bottom rim portion is proximate to the inner bottom surface 20.

The accommodating section 14 further provides a curved shaped loop abutment wall 21 for the optical fibre element at a longitudinal end side opposing the fixation section 15. The loop abutment wall 21 is formed with a curvature radius complying at least with a critical bending radius of the optical fibre element and/or optical fibre cable to be accommodated in the accommodating section 14. The loop abutment wall 21 supports at an upper area a holding rib 22 for holding the optical fibre element/cable, respectively, on the inner bottom surface 20.

Due to the above configuration of the optical fibre coupling device 1, which comprises two access 3 and an accommodating section 14 having the loop abutment wall 21 preferably provided with a holding rib 22, a loop of the incoming optical fibre cable can be realized, wherein the incoming optical fibre cable/element enters the housing 6 through one access 3, is then guided along the abutment wall 21 toward the second access 3 and is subsequently guided therethrough to the outside of the housing 6. Accordingly, in case several optical fibre elements are guided from an outside to an inside of the housing 6, wherein not all optical fibre elements shall be connected with the optical fibre elements of the outgoing optical fibre cable 2, the unconnected optical fibre elements may be further guided through the access 3 to an outside of the housing 6 to be further operated outside of the optical fibre coupling device 1. Thus, the optical fibre coupling device 1 provides a high degree of freedom for its usage. As a matter of course, the access 3 may be adapted to guide more than one incoming optical fibre cables. Furthermore, by providing only one access 3, said access 3 may be also used for guiding the incoming optical fibre cable to the inside and to the outside of the optical fibre coupling device 1, while the optical fibre cable/element is looped within the housing 6 in the accommodating section 14.

Figure 2 shows a perspective top view of the first housing part 10. The first housing part 10 is separated into the fixation section 15 and the accommodating section 14 by a separation wall 23 extending transverse to the longitudinal direction of the first housing part 10. The accommodating section 14 has a longitudinal length larger than a longitudinal length of the fixation section 15, whereas a width and height of said sections 14, 15 is substantially identical due to the rectangular box shape of the first housing part 10. The holding recess 24 is V-shaped in thickness direction of the longitudinal wall portion 17 with a tip of the V-shape directing to the accommodating section 14. The associated hook portion 25 of the optical fibre element splice holder 16 (not shown) has a corresponding shape. Thus, the optical fibre element splice holder 16 may be reliably supported in the holding recess 24 of the first housing part 10 in directions other than an insertion direction for inserting the hook portion 25 into the associated holding recess 24. Further, the screw holes 13 are provided outside the accommodating section 14 in a space formed between the curved shaped loop abutment wall 21 and a corner area of the first housing part 10, respectively. The loop abutment wall 21 is substantially divided into three regions 21 a, 21 b in circumferential direction of the curved shaped loop abutment wall 21. Particularly, the loop abutment wall 21 comprises two outer curved abutment wall regions 21 a sandwiching a central abutment wall region 21 b being substantially straight and supporting the holding rib 22. The central abutment wall region 21 b forms part of the first housing part wall defining the first housing part 10 at the one longitudinal end side thereof. The central abutment wall region 21 b provides at a change-over to the outer curved abutment wall regions 21 a and to outer longitudinal end wall portions of the first housing part 10 a breaking edge 27 for removing the central abutment wall region 21 b with the holding rib 22 in case of need. If the central abutment wall region 21 b is removed, the first housing part 10 further provides an additional passage for guiding an optical fibre cable/element therethrough, i.e. to an inside of the housing 6 or to an outside thereof. Moreover, an optical fibre connector may be installed into the passage and supported therein. The optical fibre connector (not shown) may be used for connecting at least one optical fibre element received within the housing 6 with an optical fibre element provided outside of the housing 6.

As further shown in Figure 2, the longitudinal wall portion 17 provides a wall recess 28 at its longitudinal end side proximate the screw hole 13. The wall recess forms a latch 28 engageable from a longitudinal direction of the first housing part 10. The latch 28 is adapted to receive a spring lug provided with a supporting module (not shown) for supporting the optical fibre coupling device 1. The latch 28 and the spring lug form snapping means for releasable secure the optical fibre coupling device against the supporting module. The supporting module may be adapted to support more than one optical fibre coupling devices 1, preferably in a stacked manner, i.e. one upon the other. The supporting module may be used for installing the optical fibre coupling device 1 in e.g. the building distributor box.

A positioning and fixation of the optical fibre coupling device 1 in the supporting module may be achieved by positioning and fixation means provided outside the housing 6 at the longitudinal wall portion 17. Said positioning and fixation means (not shown) has substantially an L-shape, preferably a hammer-head shape when viewed from a longitudinal side of the first housing part 10 and protrudes from the side surface of the longitudinal wall portion 17. The free end leg (head portion) of the positioning and fixation means is distant from the outer side surface of the longitudinal wall portion 17 and extends substantially in parallel thereto. The free end leg (head portion) may be received by a slot provided with the supporting module, wherein said slot extends in a direction parallel to the longitudinal direction of the first housing part 10. Said slot may be formed with a receiving opening for receiving the free end leg (head portion) of the L-shaped (hammer-head shaped) positioning and fixation means and, further, with a guiding opening for receiving and guiding a protruding leg (neck portion) of the L-shaped (hammer-head shaped) positioning and fixation means in the direction parallel to the longitudinal direction of the first housing part 10, wherein the protruding leg (neck portion) connects the free end leg (head portion) with the longitudinal wall portion 17. The guiding opening may have a longitudinal length so as to allow interaction of the latch 28 with the spring lug of the supporting module at a longitudinal end position of the guiding opening. In other words, after the positioning and fixation means reaches the longitudinal end of the guiding opening, the spring lug may snap the latch 28 so as to provide a releasable positive locking in the direction parallel to the longitudinal direction of the first housing part 10.

Alternatively or in addition to the above, the optical fibre coupling device 1 preferably comprises a positioning and fixation means 9 as shown in Figure 2. The positioning and fixation means 9 is plate shaped and protrudes from the longitudinal wall portion 17 in a bottom plane of the first housing part 10 transverse to the longitudinal direction of the first housing part 10. The positioning and fixation means 9 has a hole 29 extending perpendicular to the extension direction of the positioning and fixation means 9. The hole 29 is adapted to receive a fixation means such as a screw or bolt for fixing the optical fibre coupling device 1 directly for instance to a base plate or the like of e.g. the building distributor box. According thereto, the optical fibre coupling device 1 may be installed in the building distributor box without the need of the supporting module.

As further shown in Figure 2, the fixation section 15 is provided proximate the longitudinal end side of the first housing part 10, which longitudinal end side comprises the access 3, the exit 5 and the passages 18. The passages 18 are formed between a plurality of bars 53 provided at the one longitudinal end side of the first housing part 10 and protruding from the inner bottom surface 20 in parallel to the longitudinal wall portions 17, wherein the access 3 and the exit 5 are formed between an inside side surface of the longitudinal wall portion 17 and a thereto facing bar 53, respectively. The bar 53 provides on a top a substantially flat portion 54 for providing a support for the lid 40. A protruding height of the bars 53 is smaller than a corresponding height of the longitudinal wall portions 17. Every second bar 53 counted from the bar 53 facing the longitudinal wall portion 17 is connected with the separating wall 23 by a division wall 55, which separating wall 23 substantially provides a configuration similar to the bars 53 except the protruding height. In other words, the separating wall 23 is formed of a plurality of separating wall bars 56 arranged in alignment with the bars 53, respectively. Thus, the separating wall 23 provides a plurality of separating wall passages 57 aligned with the passages 18 so as to form the passageway 51 in longitudinal direction of the first housing part 10, wherein the passageway 51 communicates by the passage 18 and the thereto aligned separating wall passage 57 with the accommodating section 14 and with the outside of the housing 6, respectively. The passage 18 and the separating wall passage 57 provide a width in direction transverse to the longitudinal direction of the first housing part 10 for guiding therethrough at least one optical fibre cable and/or at least one optical fibre element. The separating wall bars 56 has a protruding height higher than the corresponding protruding height of the bars 53 to provide in longitudinal direction of the first housing part 10 an abutment for the lid 40. Moreover, the fixation section 15 provide holding legs 58 protruding a top surface of the bar 53. The holding leg 58 is provided for retaining the lid 40 in a direction perpendicular to the inner bottom surface 20. The holding leg 58 is cross-sectionally T-shaped, wherein the T-portion forms the upper part of the holding leg 58 with respect to the inner bottom surface 20. The holding leg 58 does not need necessarily to be T-shaped. An L-shaped is also feasible. The holding leg 58 may adopt any structure as long as the top part of the holding leg 58 projects the inner bottom surface 20 in parallel thereto for retaining the lid 40 in the perpendicular direction. The upper surface of the top part of the holding leg 58 is preferably flat shaped to provide a support for the second housing part 20 forming the housing cover. The above configuration and arrangement of the bars 53, 56, the walls 23, 55 and the holding leg 58 can be preferably adapted accordingly in case of need.

Figure 3 shows an enlarged perspective side view of the fixation section 15 covered by the lid 40. The lid 40 is substantially plate shaped and comprises a plurality of lid openings 41 arranged in a row in a direction transverse to the longitudinal direction of the first housing part 10. The lid 40 has a size adapted to completely cover the fixation section 15. In other words, the lid 40 fits between the longitudinal wall portions 17 with respect to the transverse direction and between the one longitudinal end side of the first housing part 10 and the separating wall 23 in view of the longitudinal direction of the first housing part 10. The lid openings 41 are formed along a central area of the lid 40. The lid openings 41 communicate with the access 3, the exit 5 and the passageway 51 provided in the fixation section 15. Accordingly, a number of the lid openings 41 correspond to a number of the passageways 51, the access 3 and the exit 5.

The lid openings 41 may be used for introducing preferably a thermosetting resin into the passageways 51 after placing therein the outgoing optical fibre cables 2 and/or the incoming optical fibre cable 4. Preferably, a cable jacket of the outgoing optical fibre cable 2, which cable jacket surrounds at least one optical fibre element and, further preferably, at least one strain relief element, may be removed so as to expose the strain relief element and/or the optical fibre element, wherein a longitudinal end of the cable jacket from which the strain relief element and the optical fibre element project forms a change-over portion for the outgoing optical fibre cable 2. The change-over portion is inserted into the passageway 51 formed between the passage 18 and the separating wall passage 57, wherein at least the optical fibre element of the outgoing optical fibre cable 2 is guided through the fixation section 15 from the outside of the housing 6 to the inside thereof. The cable jacket and, preferably, the strain relief element are arranged within said fixation section 15. Then, the lid 40 is mounted from the one longitudinal end side of the first housing part 10 so as to cover the fixation section 15. Thereafter, a thermosetting resin or the like is introduced through the lid openings 41 covering the passageways 51 receiving the cable jacket, preferably the strain relief element and the optical fibre element of the outgoing optical fibre cable 2. The lid 40 is retained by the holding legs 58 in the direction perpendicular to the inner bottom surface 20 in case the thermosetting resin will push the lid 40 toward the upper side of the first housing part 10. Based on the thermosetting resin or, in general, dependent on the material selected to be introduced into the lid opening 41, the longitudinal end side of the cable jacket will be sealed. Further, at least the cable jacket and, preferably the strain relief element will be fixed to the thermosetting resin, which forms an insert in the sense of the present invention after being hardened. As the insert is retained in longitudinal direction of the first housing part 10 by the bars 53 providing an abutment 19 for the insert in longitudinal direction of the outgoing optical cable 2 and by the separating wall bars 56, which bars 53 and separating wall bars 56 are not connected with each other, a tension load acting on the outgoing optical fibre cable 2 will be absorbed by the insert and transferred to the housing 6. The optical fibre element guided by the outgoing optical fibre cable 2 may be also fixed within the fixation section 15 to the insert or, alternatively, may be provided movable over the fixation section 15 in longitudinal direction thereof. By means of the introducible thermosetting resin, the incoming optical fibre cable 4 received within the passageway 51 communicating with the access 3 or the exit 5 may likewise be fixed in the fixation section 15 in case of need. Alternatively, as a division wall 55 is formed between the plurality of passageways 51 and since a lid opening 41 is provided for communicating with each passageway 51, the thermosetting resin or other respective flowable and hardenable material may be introduced through selective lid openings 41. Alternatively to the above, a fixation between the insert and the outgoing optical fibre cable 2 may be conducted prior to the insertion of the insert into the fixation section 15. For this case, the division walls 55 may be at least partially omitted in case of need. A predetermined length of the outgoing optical fibre cable 2 fixed to the insert, i.e. a predetermined length of the cable jacket, preferably of the cable jacket and the strain relief element and, further preferable, of the cable jacket, the strain relief element and the optical fibre element, depends on a fixation length in longitudinal direction of the outgoing optical fibre cable 2 by which fixation length the outgoing optical fibre cable 2 is fixed to the insert. For the first case described above, the predetermined length corresponds to a longitudinal inner length of the fixation section 15, which inner longitudinal length is a distance formed between the inner surfaces of the bars 53 and the separating wall bars 56, which inner surfaces face the fixation section 15, respectively.

The lid 40 comprises a breakage zone 43 between the lid opening 41 communicating with the access 3 and the adjacent lid opening 41 communicating with the passageway 51 provided adjacent to the access 3. The breakage zone 43 extends in longitudinal direction of the lid 40. A further breakage zone 43 is provided between the lid opening 41 communicating with the exit 5 and the lid opening 41 communicating with the thereto adjacent passageway 51. Due to said breakage zone 43, the respective part of the lid 40 may be removed therefrom so as to provide a lid 40 only covering the passageways 51 formed between the passage 18 and the separating wall passages 57, thereby allowing access to the passageways 51 communicating with the access 3 and/or the exit 5, respectively.

The longitudinal end side of the lid 40 adapted to abut the separating wall 23 provides two longitudinal lid slots 45 for receiving the holding leg 58 to be retained thereby in the perpendicular direction. The transverse end sides of the lid 40, which transverse end sides extend in parallel to the longitudinal wall portions 17, respectively, comprise a lid side slot 44 which has a shape corresponding to a longitudinal wall portion side slot 59 provided with the longitudinal wall portion 17 in the area of the fixation section 15 (Figure 1B). The side slots 44, 59 are adapted to receive a second housing cover leg 33 formed with the second housing part 30 at a corresponding position. According thereto, a positive lock is affected between the second housing part 30 and the first housing part 10 and, further, between the second housing part 30 and the lid 40, which positive lock prevents movement of the second housing cover 30 and of the lid 40 in longitudinal direction of the housing 6. The second housing cover leg 33 has a thickness adapted to abut simultaneously against longitudinal rim portions defining the side slots 44, 59, respectively.

The lid 40 has a central lid detent recess frame 42 forming a lid detent recess for receiving a detent latch 32 provided with the second housing part 30 at the longitudinal end side thereof. The lid detent recess frame 42 is provided at the longitudinal lid end side of the lid 40, which longitudinal lid end side matches with the one longitudinal end side of the first housing part 10. The lid detent recess frame 42 projects the lid 40 in longitudinal direction of the first housing part 10 and, further, protrude a top plane of the first housing part 10. The lid detent recess frame 42 is provided at a centre area of the lid 40, respectively. Alternatively, a pair of detent recess frames may be provided, each arranged at a corner area of the lid 40. A number of the lid detent recess frames 42 is not limited to the number described above. Alternatively, one lid detent recess frame 42 may be provided for forming one or more lid detent recesses. Further alternative, more than two lid detent recess frames 42 may be formed with the lid 40.

By means of the detent latch 32 and the lid detent recess formed by the lid detent recess frame 42, the second housing part 30 may be simply mounted on the first housing part 10 by inserting the detent latch 32 into the associated lid detent recess, wherein the second housing part 30 is initially held obliquely with respect to the first housing part 10. Then, the second housing part 30 is pivoted around a pivot axis formed between the lid detent recess and the detent latch 32 received by the lid detent recess until the second housing part 30 covers the first housing part 10, wherein in said covered state, the second housing legs 33 are received within the side slots 44, 59, respectively. Subsequent thereto, screws or bolts are inserted through the through-holes 31 to be secured in the respective screw holes 13. In this context, the second housing part 30 preferably provides at its lateral end side at least one cover protrusion 34 (Figure 1A) adapted to be received within the holding recess 24 to fit in said holding recess 24. Thereby, the optical fibre element splice holder 16 may be securely retained in the holding recess 24. Further, a securing of the second housing part 30 in longitudinal direction of the optical fibre coupling device 1 may be improved, as the cover protrusion 34 will co-operate with the holding recess 24 so as to provide a positive locking therebetween in said longitudinal direction.

### Reference list

- 1: optical fibre coupling device
- 2: outgoing optical fibre cable
- 3: access
- 4: incoming optical fibre cable
- 5: exit
- 6: housing
- 7: optical fibre connector
- 8: hinge
- 9: positioning and fixation means
- 10: first housing part
- 13: screw hole
- 14: accommodating section
- 15: fixation section
- 16: optical fibre element splice holder
- 17: longitudinal wall portion
- 18: passage
- 19: abutment
- 20: inner bottom surface
- 21: loop abutment wall
- 21 a: outer curved abutment wall region
- 21 b: central abutment wall region
- 22: holding rib
- 23: separation wall
- 24: holding recess
- 25: hook portion
- 27: breaking edge
- 28: wall recess
- 29: hole
- 30: second housing part
- 31: through-hole
- 32: detent latch
- 33: second housing cover leg
- 34: cover protrusion
- 40: lid
- 41: lid opening
- 42: lid detent recess frame
- 43: lid breakage zone
- 44: lid side slot
- 45: longitudinal lid slot
- 51: passageway
- 53: bar
- 54: flat supporting portion
- 55: division wall
- 56: separating wall bar
- 57: separating wall passage
- 58: holding leg
- 59: longitudinal wall portion side slot

## Claims

1. An optical fibre coupling device (1) comprising a housing (6) providing at least one passage (18) for an outgoing optical fibre cable (2) comprising at least one optical fibre element;
at least one access (3) for an incoming optical fibre cable (4) comprising at least one optical fibre element being connectable to said at least one optical fibre element of said at least one outgoing optical fibre cable (2);
an accommodating section (14) for accommodating and connecting the at least one optical fibre element of the outgoing optical fibre cable (2) with the at least one optical fibre element of the incoming optical fibre cable (4); and
a fixation section (15) with at least one passageway (51) arranged between the accommodating section (14) and the at least one passage (18) for accommodating and securing against the housing (6) a predetermined length of the outgoing optical fibre cable (2), wherein said at least one passageway (51) is box-shaped and covered by a releasable lid (40),
**characterized in that**
the releasable lid (40) has at least one lid opening (41) communicating with said at least one passageway (51), thereby forming a receiving space for receiving a thermosetting adhesive material introducible through said opening (41) to form an insert in said receiving space, and that
the housing (6) is comprised of a first housing part (10) and a second housing part (30) which first and second housing parts (10; 30) are fixed to each other at one side of the housing (6) at least by means of a detent recess (42) provided with one of the first and second housing parts (10; 30), and a corresponding detent latch (32) engaged with the detent recess (42) and provided with the other one of the first and second housing parts (10; 30), wherein one of the first and second housing parts (10; 30) is adapted to slidably receive the lid (40) from one side of the housing (6) and to hold the lid (40) in the remaining side directions of the housing (6), wherein said lid (40) comprises said detent recess (42) for receiving the associated detent latch (32) provided with the other one of the first and second housing parts (10, 30).

2. The optical fibre coupling device (1) according to claim 1, comprising said insert wherein the fixation sec-tion (15) is configured to receive and secure against the housing (6) said insert to which the predetermined length of the outgoing optical fibre cable (2) is fixable.

3. The optical fibre coupling device (1) according to claim 1 or 2, wherein the housing (6) provides an abutment (19) for the insert between said passageway (51) and the at least one passage (18).

4. The optical fibre coupling device (1) according to any one of the preceding claims,
wherein the housing (6) provides an exit (5) for passing therethrough an unconnected optical fibre element of the incoming optical fibre cable (4) to an outside of the housing (6).

5. The optical fibre coupling device (1) according to claim 4, wherein the exit (5) is provided at the side of the housing (6) comprising the at least one passage (18).

6. The optical fibre coupling device (1) according to any of the preceding claims, wherein the access (4) is provided at the side of the housing (6) comprising the at least one passage (18).

7. The optical fibre coupling device (1) according to any one of the preceding claims, wherein said first housing part (10) comprises at least one recess (24) for receiving a hook portion (25) of an optical fibre element splice holder (16) being supported suspendedly thereby inside the housing (6).

8. The optical fibre coupling device (1) according to any one of the preceding claims, wherein the housing (6) comprises at least one positioning and fixation means protruding from a side of said housing (6) other than the side having the at least one passage (18) and the access (4), said positioning and fixation means being adapted to co-operate with an associated receiving means provided with an optical fibre coupling device supporting module to secure the optical fibre coupling device against said supporting module.

9. The optical fibre coupling device (1) according to claim 8, wherein said positioning and fixation means is substantially L-shaped with one leg thereof projecting the housing (6) side surface and extending substantially parallel thereto.

10. An optical fibre coupling assembly comprising
an optical fibre coupling device (1) according to anyone of the claims 1 to 9; and
at least one optical fibre cable (2) guided by the at least one passage (18), wherein a predetermined length of the outgoing optical fibre cable (2) is fixed to an insert of the thermosetting adhesive material which is introduced though the lid opening (41), which insert is received within the fixation section (15) and secured against the housing (6).

11. An optical fibre coupling assembly according to claim 10, wherein said optical fibre cable (2) comprises an outer jacket surrounding at least one optical fibre element and at least one strain relief element arranged between the outer jacket and the at least one optical fibre element, wherein at least said strain relief element is fixed to the insert.

## Patentansprüche

1. Lichtwellenleiterkopplungsvorrichtung (1), die aufweist: ein Gehäuse (6), das mindestens einen Durchgang (18) für ein abgehendes Lichtwellenleiterkabel (2) bereitstellt, das mindestens ein Lichtwellenleiterelement aufweist;
mindestens einen Zugang (3) für ein ankommendes Lichtwellenleiterkabel (4), das mindestens ein Lichtwellenleiterelement aufweist, das mit dem mindestens einen Lichtwellenleiterelement des mindestens einen abgehenden Lichtwellenleiterkabels (2) verbunden werden kann;
einen Aufnahmeabschnitt (14) für das Aufnehmen und Verbinden des mindestens einen Lichtwellenleiterelementes des abgehenden Lichtwellenleiterkabels (2) mit dem mindestens einen Lichtwellenleiterelement des ankommenden Lichtwellenleiterkabels (4); und
einen Befestigungsabschnitt (15) mit mindestens einem Durchgang (51), der zwischen dem Aufnahmeabschnitt (14) und dem mindestens einen Durchgang (18) für das Aufnehmen und Sichern einer vorgegebenen Länge des abgehenden Lichtwellenleiterkabels (2) am Gehäuse (6) angeordnet ist, wobei der mindestens eine Durchgang (51) kastenförmig ist und mittels eines lösbaren Deckels (40) bedeckt wird;
**dadurch gekennzeichnet, dass**
der lösbare Deckel (40) mindestens eine Deckelöffnung (41) aufweist, die mit dem mindestens einen Durchgang (51) verbunden ist, wodurch ein Aufnahmeraum für das Aufnehmen eines duroplastischen Klebstoffmaterials gebildet wird, das durch die Öffnung (41) eingeführt werden kann, um einen Einsatz im Aufnahmeraum zu bilden, und dadurch, dass
das Gehäuse (6) ein erstes Gehäuseteil (10) und ein zweites Gehäuseteil (30) aufweist, wobei das erste und das zweite Gehäuseteil (10; 30) aneinander auf einer Seite des Gehäuses (6) mindestens mittels einer Arretierungsaussparung (42), die bei einem von erstem und zweitem Gehäuseteil (10; 30) vorhanden ist, und einer entsprechenden Arretierklinke (32) befestigt sind, die mit der Arretierungsaussparung (42) in Eingriff kommt und am anderen von erstem und zweitem Gehäuseteil (10; 30) vorhanden ist, wobei eines von erstem und zweitem Gehäuseteil (10; 30) ausgebildet ist, um verschiebbar den Deckel (40) von einer Seite des Gehäuses (6) aufzunehmen, und um den Deckel (40) in den restlichen Seitenrichtungen des Gehäuses (6) zu halten, wobei der Deckel (40) die Arretierungsaussparung (42) für das Aufnehmen der dazugehörenden Arretierklinke (32) aufweist, die am anderen von erstem und zweitem Gehäuseteil (10; 30) vorhanden ist.

2. Lichtwellenleiterkopplungsvorrichtung (1) nach Anspruch 1, die den Einsatz aufweist, bei der der Befestigungsabschnitt (15) ausgebildet ist, um den Einsatz aufzunehmen und am Gehäuse (6) zu sichern, an dem die vorgegebene Länge des abgehenden Lichtwellenleiterkabels (2) befestigt werden kann.

3. Lichtwellenleiterkopplungsvorrichtung (1) nach Anspruch 1 oder 2, bei der das Gehäuse (6) einen Anschlag (19) für den Einsatz zwischen dem Durchgang (51) und dem mindestens einen Durchgang (18) bereitstellt.

4. Lichtwellenleiterkopplungsvorrichtung (1) nach einem der vorhergehenden Ansprüche, bei der das Gehäuse (6) einen Austritt (5) für das Hindurchführen eines nicht verbundenen Lichtwellenleiterelementes des ankommenden Lichtwellenleiterkabels (4) zu einer Außenseite des Gehäuses (6) bereitstellt.

5. Lichtwellenleiterkopplungsvorrichtung (1) nach Anspruch 4, bei der der Austritt (5) auf der Seite des Gehäuses (6) vorhanden ist, die den mindestens einen Durchgang (18) aufweist.

6. Lichtwellenleiterkopplungsvorrichtung (1) nach einem der vorhergehenden Ansprüche, bei der der Zugang (4) auf der Seite des Gehäuses (6) vorhanden ist, die den mindestens einen Durchgang (18) aufweist.

7. Lichtwellenleiterkopplungsvorrichtung (1) nach einem der vorhergehenden Ansprüche, bei der das erste Gehäuseteil (10) mindestens eine Aussparung (24) für das Aufnehmen eines Hakenabschnittes (25) eines Spleißhalters (16) für das Lichtwellenleiterelement aufweist, der hängend dadurch innerhalb des Gehäuses (6) getragen wird.

8. Lichtwellenleiterkopplungsvorrichtung (1) nach einem der vorhergehenden Ansprüche, bei der das Gehäuse (6) mindestens ein Positionier- und Befestigungsmittel aufweist, das aus einer Seite des Gehäuses (6) vorsteht, die nicht die Seite ist, die den mindestens einen Durchgang (18) und den Zugang (4) aufweist, wobei das Positionier- und Befestigungsmittel ausgebildet ist, um mit dem dazugehörenden Aufnahmemittel zusammenzuwirken, das mit einem Tragemodul für die Lichtwellenleiterkopplungsvorrichtung versehen ist, um die Lichtwellenleiterkopplungsvorrichtung am Tragemodul zu sichern.

9. Lichtwellenleiterkopplungsvorrichtung (1) nach Anspruch 8, bei der das Positionier- und Befestigungsmittel im Wesentlichen L-förmig ist, wobei ein Schenkel davon aus der Seitenfläche des Gehäuses (6) ragt und sich im Wesentlichen parallel dazu erstreckt.

10. Lichtwellenleiterkopplungsanordnung, die aufweist:
eine Lichtwellenleiterkopplungsvorrichtung (1) nach einem der Ansprüche 1 bis 9; und
mindestens ein Lichtwellenleiterkabel (2), das durch den mindestens einen Durchgang (18) geführt wird, wobei eine vorgegebene Länge des abgehenden Lichtwellenleiterkabels (2) an einem Einsatz aus dem duroplatischen Klebstoffmaterial befestigt ist, das durch die Deckelöffnung (41) eingeführt wird, wobei der Einsatz innerhalb des Befestigungsabschnittes (15) aufgenommen und am Gehäuse (6) gesichert wird.

11. Lichtwellenleiterkopplungsanordnung nach Anspruch 10, bei der das Lichtwellenleiterkabel (2) einen Außenmantel, der mindestens ein Lichtwellenleiterelement umgibt, und mindestens ein Zugentlastungselement aufweist, das zwischen dem Außenmantel und dem mindestens einen Lichtwellenleiterelement angeordnet ist, wobei mindestens das Zugentlastungselement am Einsatz befestigt ist.

## Revendications

1. Dispositif de couplage de fibres optiques (1), comprenant un boîtier (6) établissant
au moins un passage (18) pour un câble à fibres optiques sortant (2), comprenant au moins un élément à fibres optiques ;
au moins un accès (3) pour un câbles à fibres optiques rentrant (4), comprenant au moins un élément à fibres optiques pouvant être connecté audit au moins un élément à fibres optiques dudit au moins un câble à fibres optiques sortant (2) ;
une section de logement (14) pour loger et connecter le au moins un élément à fibres optiques du câble à fibres optiques sortant (2) audit au moins un élément à fibres optiques du câble à fibre optiques entrant (4) ; et
une section de fixation (15), comportant au moins une voie de passage (51) agencée entre la section de logement (14) et le au moins un passage (18), pour recevoir une longueur prédéterminée du câble à fibres optiques sortant (2) et la fixer contre le boîtier (6), ladite au moins une voie de passage (51) ayant une forme en boîte et étant recouverte par un couvercle amovible (40) ;
**caractérisé en ce que**
le couvercle amovible (40) comporte au moins une ouverture de couvercle (41) communiquant avec ladite au moins une voie de passage (51), formant ainsi un espace de réception pour recevoir un matériau adhésif thermodurcissable pouvant être introduit à travers ladite ouverture (41) pour former un insert dans ledit espace de réception, et **en ce que**
le boîtier (6) comprend une première partie de boîtier (10) et une deuxième partie de boîtier (30), ces première et deuxième parties de boîtier (10 ; 30) étant fixées l'une à l'autre au niveau d'un côté du boîtier (6), au moins par l'intermédiaire d'un évidement à encliquetage (42) comportant une partie des première et deuxième parties de boîtier (10 ; 30), et un verrou à encliquetage correspondant (32), engagé dans l'évidement à encliquetage (42) et comportant l'autre partie des première et deuxième parties de boîtier (10 ; 30), une des première et deuxième parties de boîtier (10 ; 30) étant adaptée pour recevoir de manière coulissante le couvercle (40) à partir d'un côté du boîtier (6) et pour retenir le couvercle (40) dans les directions latérales restantes du boîtier (6), ledit couvercle (40) comprenant ledit évidement à encliquetage (42) pour recevoir le verrou à encliquetage associé (32) comportant l'autre partie des première et deuxième parties du boîtier (10, 30).

2. Dispositif de couplage de fibres optiques (1) selon la revendication 1, comprenant ledit insert, dans lequel la section de fixation (15) est configurée de sorte à recevoir ledit insert et à le fixer contre le boîtier (6) sur lequel peut être fixée la longueur prédéterminée du câble à fibres optiques (2).

3. Dispositif de couplage de fibres optiques (1) selon les revendications 1 ou 2, dans lequel le boîtier (6) établit une butée (19) pour l'insert entre ladite voie de passage (51) et le au moins un passage (18).

4. Dispositif de couplage de fibres optiques (1) selon l'une quelconque des revendications précédentes, dans lequel le boîtier (6) établit une sortie (5) en vue du passage d'un élément à fibres optiques non connecté du câble à fibres optiques rentrant (4) vers une partie externe du boîtier (6).

5. Dispositif de couplage de fibres optiques (1) selon la revendication 4, dans lequel la sortie (5) est agencée au niveau du côté du boîtier (6) comprenant le au moins un passage (18).

6. Dispositif de couplage de fibres optiques (1) selon l'une quelconque des revendications précédentes, dans lequel l'accès (4) est agencé au niveau du côté du boîtier (6) comprenant le au moins un passage (18).

7. Dispositif de couplage de fibres optiques (1) selon l'une quelconque des revendications précédentes, dans lequel ladite première partie du boîtier (10) comprend au moins un évidement (24) pour recevoir une partie de crochet (25) d'un support d'épissure de l'élément à fibres optiques (16), supporté par suspension par celui-ci à l'intérieur du boîtier (8).

8. Dispositif de couplage de fibres optiques (1) selon l'une quelconque des revendications précédentes, dans lequel le boîtier (6) comprend au moins un moyen de positionnement et de fixation, débordant d'un côté dudit boîtier (6) autre que le côté comportant le au moins un passage (18) et l'accès (4), ledit moyen de positionnement et de fixation étant adapté pour coopérer avec un moyen de réception associé comportant un module de support du dispositif de couplage de fibres optiques, pour fixer le dispositif de couplage de fibres optiques contre ledit module de support.

9. Dispositif de couplage de fibres optiques (1) selon la revendication 8, dans lequel ledit moyen de positionnement et de fixation a une forme pratiquement en L, avec une branche débordant de la surface latérale du boîtier (6) et s'étendant de manière pratiquement parallèle à celle-ci.

10. Assemblage de couplage de fibres optiques, comprenant
un dispositif de couplage de fibres optiques (1) selon l'une quelconque des revendications 1 à 9 ; et au moins un câble à fibres optiques (2) guidé par le au moins un passage (18), dans lequel une longueur prédéterminée du câble à fibres optiques sortant (2) est fixée sur un insert du matériau adhésif thermodurcissable, introduit à travers l'ouverture du couvercle (41), cet insert étant reçu dans la section de fixation (15) et fixé contre le boîtier (6).

11. Assemblage de couplage de fibres optiques selon la revendication 10, dans lequel ledit câble à fibres optiques (2) comprend une gaine externe entourant au moins un élément à fibres optiques et au moins un élément de décharge de traction agencé entre la gaine externe et le au moins un élément à fibres optiques, au moins ledit élément de décharge de traction étant fixé sur l'insert.
